# FASCICULE DE BREVET EUROPEEN

(11) **EP 0 681 171 B1**
(45) Date de publication et mention de la délivrance du brevet: **25.03.1998**
(21) Numéro de dépôt: 95400950.2
(22) Date de dépôt: 26.04.1995
(51) Int. Cl.: G01M 3/04

(54) **Appareillage pour la vérification de l'étanchéité d'un bassin**
Vorrichtung zur Prüfung der Dichtigkeit eines Beckens
Apparatus for testing the imperviousness of a basin

(30) Priorité: 02.05.1994 FR 9405321
(43) Date de publication de la demande: 08.11.1995
(73) Titulaire: ELECTRICITE DE FRANCE Service National, 75008 Paris (FR)
(72) Inventeur: Sylvestre, Jean-Michel, F-77150 Lesigny (FR); Bonnard, Pierre, F-82440 Mirabel (FR)
(74) Mandataire: Polus, Camille

(56) Documents cités:
- FR-A- 2 617 285

## Description

La présente invention est relative à la vérification de l'étanchéité de bassins à liquide afin de détecter la présence éventuelle de fuites qui pourraient se manifester dans leurs parois, notamment à la vérification des "piscines" à usage nucléaire.

Dans de nombreuses industries, on a besoin de contenir ou de recueillir des liquides dans des cuves, bassins ou similaires étanches. C'est particulièrement le cas des activités nucléaires, où au moins à titre de sécurité, on dispose à l'entour des enceintes où circulent des substances radio-actives en particulier liquides, des bassins destinés à recueillir et confiner tout liquide contaminé qui s'en échapperait notamment par fuite de l'installation. On comprend que pour des raisons de sécurité, il est nécessaire de pouvoir vérifier et détecter, et de préférence localiser et aussi mesurer, les fuites qui peuvent se déclarer dans ce type de bassin habituellement désigné dans le secteur considéré sous le nom de "piscine".

Comme on le sait, les piscines de ce type sont usuellement constituées d'un cuvelage dont la maçonnerie extérieure, faite le plus souvent en béton, est revêtue sur sa face intérieure d'une doublure d'étanchéité faite traditionnellement de tôles réunies par soudure. Entre la maçonnerie et sa doublure métallique, est disposé un enduit qui assure la liaison. La doublure métallique est le plus souvent faite de tôles en acier inoxydable réunies par soudure suivant des jonctions à clin ou bout-à-bout.

Quel que soit le soin apporté aux jonctions au moment du soudage, il est nécessaire de s'assurer de la qualité des soudures au moment de l'exécution des travaux de construction et aussi, ensuite, à titre préventif ou curatif afin de s'assurer qu'aucune faille n'existe dans le cuvelage.

De toutes petites anomalies, de l'ordre du dixième de millimètre de diamètre ou moindre, peuvent provoquer des incidents notables si l'on se souvient en particulier qu'une telle piscine peut avoir plus d'une dizaine de mètres de profondeur.

Diverses techniques ont déjà été proposées pour faire ce type de vérifications de l'étanchéité de bassins. Elles font souvent appel à des systèmes de mesure immergés manoeuvrés par des scaphandriers ou télécommandés depuis la surface.

La détection acoustique qui a déjà été proposée si elle est rapide ne permet cependant pas d'explorer la totalité des parois et est relativement peu sensible du fait des influences néfastes des bruits environnants.

La détection thermographique infrarouge est d'une mise en oeuvre complexe, nécessite des matériels volumineux et conduit à un diagnostic aléatoire.

La détection à dépression à l'aide de cloches "à vide" où l'on met en évidence la présence de bulles d'air à l'aide d'ultra-sons est une d'efficacité incertaine si la fuite ne fait pas pénétrer d'air dans le liquide.

D'autres techniques ont aussi été proposées qui font appel à des chambres isobares, aux courants de Foucault mais, en pratique, sont peu utilisées du fait de leur complexité, d'incertitude d'interprétation ou de mise en oeuvre particulièrement délicate.

Une de ces techniques est illustré par exemple par le document FR 2 617 285 auquel on pourra utilement se reporter.

Un des buts de l'invention est de permettre la vérification de l'étanchéité de bassins, notamment de piscines à usage nucléaire, à l'aide d'un appareillage qui ne présente pas des inconvénients de cette nature, qui soit simple de mise en oeuvre et d'interprétation facile, qui convienne pour des surfaces planes ou non et qui ne nécessite pas en principe la présence de plongeurs ou de scaphandriers.

L'invention a pour objet un appareillage pour la vérification de l'étanchéité d'un bassin à liquide notamment d'une piscine à usage nucléaire. Cet appareillage est caractérisé en ce qu'il comprend (a) un corps délimitant une chambre cylindrique d'axe donné avec une surface intérieure, un fond et une ouverture, (b) un piston qui est logé dans la chambre dont il est coaxial et qui est apte à y coulisser selon son axe et qui comprend une jupe périphérique avec deux cloisons terminales et une douille creuse avec un flasque destiné à coopérer avec l'une de ces cloisons et un bout, (c) un guide axial qui est constitué d'une part d'un manchon creux avec une paroi, un orifice et un obturateur, qui occupe partiellement la chambre dont il est coaxial et qui est fixé à son fond qu'il transperce et d'autre part d'un fourreau creux avec une paroi, un orifice et un obturateur qui entoure au moins localement le manchon dont il est coaxial et qui est fixé aux cloisons qu'il transperce, (d) une membrane étanche tubulaire flexible fixée d'une part au corps et d'autre part au piston de manière à prendre place entre ces surfaces intérieure et jupe et à délimiter deux compartiments distincts l'un de prélèvement du côté de l'ouverture et l'autre d'évacuation du côté du fond, (e) un ressort d'armement placé entre manchon et fourreau et prenant appui sur les obturateurs de ces derniers, (f) un dispositif de verrouillage qui est constitué d'au moins un galet placé sur la surface intérieure de la chambre à proximité de son ouverture de manière à pouvoir tourner selon une direction perpendiculaire à l'axe de la chambre et d'un plateau qui est mobile en rotation entre une position verrouillée et une position déverrouillée et qui est logé dans la chambre et qui est apte à prendre cette position verrouillée où il est en appui contre le galet, et qui présente au moins un ajour périphérique que peut traverser le galet pour quitter la position verrouillée pour prendre cette position déverrouillée, un palier coaxial à l'axe qui est porté par le bout de la douille et l'obturateur du fourreau et qui reçoit le plateau pour lui permettre de passer de l'une à l'autre de ses positions, un limiteur de rotation du plateau et une sollicitation élastique tendant à maintenir le plateau dans sa position verrouillée, (g) une commande qui est portée par le corps et qui coopère avec le dispositif de verrouillage pour faire passer le plateau de sa position verrouillée à sa position déverrouillée et inversement, (h) un raccord de pompage débouchant dans le compartiment d'évacuation pour permettre de modifier la pression qui y règne relativement à celle qui règne dans le compartiment de prélèvement et (i) un capteur de déplacement qui est logé dans ces manchon et fourreau du guide entre leurs obturateurs.

D'autres caractéristiques de l'invention apparaîtront à la lecture de la description et des revendications qui suivent ainsi qu'à l'examen du dessin annexé, donné seulement à titre d'exemple, où :
- la Figure 1 est une vue schématique partielle en coupe longitudinale méridienne d'un mode de réalisation d'un appareillage selon l'invention;
- la Figure 2 est une vue de face schématique partielle de la Figure 1;
- la Figure 3 est une vue partielle schématique perspective de détail du mode de réalisation de la Figure 1;
- la Figure 4 est une vue perspective schématique de différents modes de réalisation d'embouts destinés à être montés sur le mode de réalisation illustré sur la Figure 1; et
- la Figure 5 est un croquis illustrant le fonctionnement de l'appareillage selon l'invention représenté dans diverses positions.

Les appareillages pour la vérification de l'étanchéité d'un bassin à liquide notamment d'une piscine à usage nucléaire ainsi que ces bassins et piscines étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un appareillage selon l'invention, avant d'en exposer au besoin la fabrication, la construction, la mise en oeuvre et le fonctionnement.

Dans ce qui suit, on décrira un mode de réalisation d'un appareillage selon l'invention spécialement conçu pour la vérification de l'étanchéité d'une piscine à usage nucléaire. Il est clair que l'invention n'est pas limitée à cette utilisation particulière et que l'appareillage convient à toutes les situations où il est nécessaire de s'assurer de l'étanchéité d'un bassin en détectant et évaluant les fuites aussi minimes soient elles qui peuvent y prendre naissance, et cela avec une grande sensibilité.

Comme cela apparaît clairement sur les figures du dessin un appareillage selon l'invention comprend, essentiellement, un corps 10, un piston 20, un guide axial 30, une membrane flexible 40, un ressort d'armement 50, un dispositif de verrouillage 60, une commande 70, un raccord de pompage 80, un capteur de déplacement 90, ainsi que des embouts 1000 amovibles interchangeables.

Le corps 10 délimite une chambre 100 cylindrique d'axe Δ donné. La chambre 100 comprend une surface 101 intérieure, un fond 102, et à l'opposé une ouverture 103. Le corps porte une bride 104 qui borde l'ouverture 103 et qui est destinée à recevoir les embouts pour les raisons que l'on comprendra par la suite. Le corps 10 est fait de préférence en deux éléments 11 et 12 qui sont chacun munis d'une virole 110 et 120 respectivement. Ces viroles servent à l'assemblage des deux éléments du corps à l'aide de tous moyens de fixation appropriés tels des boulons et des écrous traversant des trous appropriés comme illustré.

Le piston 20 est logé dans la chambre 100 dont il est coaxial et est apte à y coulisser selon l'axe Δ comme on le comprendra par la suite. Le piston 20 comprend une jupe 201 périphérique et deux cloisons 202 terminales, pratiquement perpendiculaires d'axe Δ. Le piston 20 porte une douille 21 creuse qui est munie à l'une de ses extrémités d'un flasque 211 qui est destiné à coopérer avec l'une des cloisons 202 du piston, comme illustré. Cette douille 21 se termine à l'autre de ses extrémités opposée par un bout 212. Comme on peut l'observer, la douille 21 et la jupe 201 du piston 20 sont coaxiales à l'axe Δ et la jupe 201 est munie d'un rebord 2010 saillant radialement en direction centrifuge de manière à ménager un espace ou intervalle entre la jupe 201 et la surface intérieure 101 de la chambre 100 pour les raisons que l'on comprendra par la suite.

Une butée 22 de fin de course limite l'amplitude de la translation du piston. Cette butée comprend d'un côté un tampon amortisseur 221 et de l'autre côté d'un arrêtoir 222.

Le guide axial 30 comprend, essentiellement, un manchon 31 creux et un fourreau 32 creux. Le manchon creux 31 occupe partiellement la chambre 100 dont il et coaxial et est fixé au fond 102 qu'il transperce de cette dernière. Ce manchon creux 31 comprend une paroi 311 périphérique, un obturateur 312 à l'une de ses extrémités et un orifice 313 à l'autre de ses extrémités. Le fourreau creux 32 entoure au moins localement le manchon 31 dont il est coaxial et est fixé aux cloisons 202 qu'il transperce du piston 20. Ce fourreau creux 32 présente une paroi 321 périphérique, un obturateur 322 à l'une de ses extrémités et un orifice 323 à l'autre de ses extrémités.

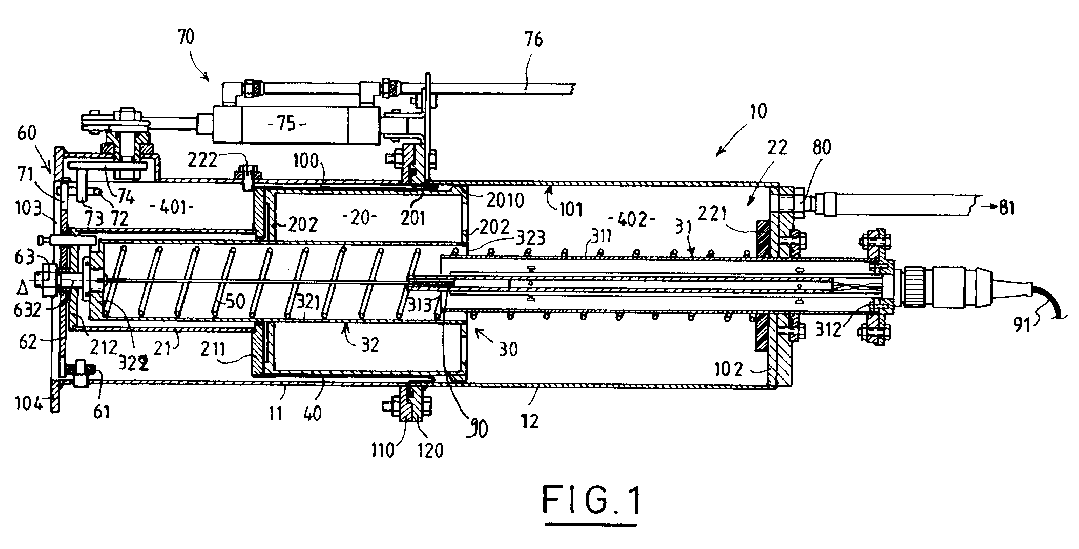

Tout ceci est clairement illustré sur la Figure 1.

La membrane 40 étanche tubulaire et flexible est fixée, d'une part, au corps 10 et, d'autre part, au piston 20 de manière à pouvoir prendre place entre la surface intérieure 101 et la jupe 201 dans l'espace ou l'intervalle précédemment indiqué. Comme on peut l'observer, la membrane 40 est maintenue, d'une part, entre les viroles 110 et 120 des éléments 11 et 12 du corps 10 et, d'autre part, entre l'une des cloisons 202 du piston 20 et le flasque 211 de la douille 21. De la sorte, la membrane 40 délimite deux compartiments distincts, l'un 401 de prélèvement du côté de l'ouverture 103, et l'autre 402 d'évacuation du côté du fond 102, pour les raisons que l'on comprendra par la suite.

Tout ceci est clairement illustré sur la Figure 1.

Le ressort d'armement 50, par exemple un ressort à boudin à spires hélicoïdales, est placé entre le manchon 31 et le fourreau 32 et prend appui sur les obturateurs 312 et 322 respectivement de ces derniers.

Tout ceci est clairement illustré sur la figure 1.

Pour les raisons qui apparaîtront pour la suite, le tampon amortisseur 221, annulaire de préférence, est placé sur le fond 102 de la chambre cylindrique et intercalé entre le ressort et ce dernier comme illustré.

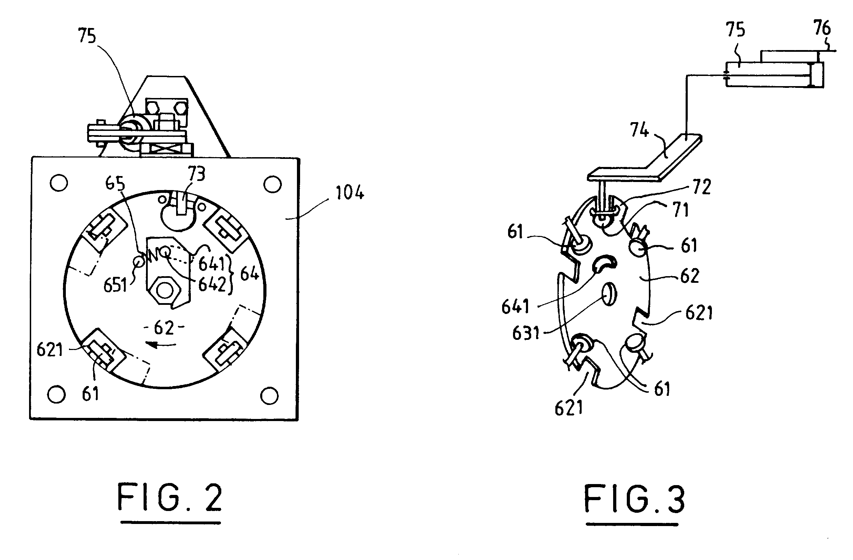

Le dispositif de verrouillage 60 comprend, essentiellement, au moins un galet 61, un plateau 62, un palier 63, un limiteur de rotation 64 et une sollicitation élastique 65. Le ou les galets tournants 61 sont placés sur la surface intérieure 101 de la chambre 100 à proximité de l'ouverture 103 de cette dernière. Ces galets sont orientés de manière à pouvoir tourner selon une direction qui est perpendiculaire à l'axe Δ comme illustré. Le plateau 62 est logé dans la chambre 100, du côté de son ouverture 103, et est monté mobile de manière à pouvoir se déplacer en tournant entre une position verrouillée et une position déverrouillée. Le plateau 62 est muni d'au moins un ajour 621 périphérique, et d'une manière générale d'autant d'ajours qu'il y a de galets. La taille de chaque ajour est telle que le galet avec lequel il coopère peut traverser l'ajour sans difficulté, pour les raisons que l'on comprendra par la suite. Lorsque le plateau est en position verrouillée il prend appui contre le ou les galets, comme illustré sur la Figure 1, et échappe à ces galets qui les traversent lorsqu'il quitte sa position verrouillé pour prendre sa position déverrouillée. Le palier 63, qui est coaxial à l'axe Δ, est porté par le bout 212 de la douille 21 et l'obturateur 322 du fourreau 32 et c'est ce palier qui reçoit le plateau 62 pour lui permettre de passer de l'une à l'autre de ses positions. Le palier 63 comprend une portée 631 centrale sur le plateau 62, et une tige 632 axiale solidaire du bout 212 de la douille 21 et de l'obturateur 322 du fourreau 32 comme illustré. Le limiteur de rotation 64 comprend une fente 641 en arc de cercle centrée sur l'axe Δ et pratiquée dans le plateau 62, ainsi qu'un doigt 642 fixé sur le bout 212 de la douille 21 et engagé dans la fente 641. De la sorte, l'amplitude angulaire de la rotation du plateau est limitée par la taille de l'arc de cercle de la fente et celle du doigt qui le traverse. La sollicitation élastique 65 tend à maintenir normalement le plateau 62 dans sa position verrouillée. Cette sollicitation élastique est, par exemple, assurée par un ressort ancré d'une part sur ce doigt et d'autre part sur une cheville 651 ou analogue, solidaire du plateau comme illustré sur la Figure 2.

La commande 70 est portée par le corps 10 et coopère avec le dispositif du verrouillage 60 de manière à pouvoir faire passer le plateau 62 de l'une à l'autre de ses positions verrouillée et déverrouillée et inversement. La commande 70 comprend une découpe 71 ménagée à la périphérie du plateau ainsi qu'un mentonnet 72 transversal, placé pour barrer localement la découpe. La commande comprend aussi une équerre 74 ou similaire montée à l'extérieur du corps et articulée sur ce dernier à proximité de son sommet, de manière à pouvoir basculer selon une direction qui est perpendiculaire à celle de l'axe comme illustré. L'une des branches de cette équerre porte un loquet 73 ou ergot ou similaire apte à coopérer avec le mentonnet 72. L'autre des branches de l'équerre est reliée à un vérin 75, à simple ou double effet, porté par le corps 10 sur lequel il est fixé à l'aide d'un gousset ou similaire monté sur les viroles par exemple. Le loquet 73 coopère avec le mentonnet 72 pour maintenir le plateau 62 dans sa position verrouillée et, lorsqu'il s'en sépare, permet au plateau de tourner pour prendre sa position déverrouillée, le loquet 73 venant alors à l'aplomb de la découpe 71 qu'il peut traverser pour les raisons qui apparaîtront par la suite.

Le raccord de pompage 80 débouche dans le compartiment d'évacuation 402 pour permettre de modifier la pression qui y règne relativement à celle qui règne dans le compartiment de prélèvement 401. Ce raccord de pompage est relié à une pompe aspirante telle que par exemple une pompe à vide, ou au besoin est relié à une pompe de surpression. Le rôle de ce raccord de pompage apparaîtra par la suite.

Le capteur de déplacement 90 est logé dans le manchon 31 et dans le fourreau 32 du guide 30 entre leurs obturateurs 312 et 322 auxquels il est fixé. Ce capteur de déplacement de tout type approprié par exemple potentiométrique ou réluctant permet d'évaluer l'amplitude de la translation du piston, et au besoin la vitesse de cette translation. Un câble 91 relie le capteur à un instrument de mesure approprié comme il est classique.

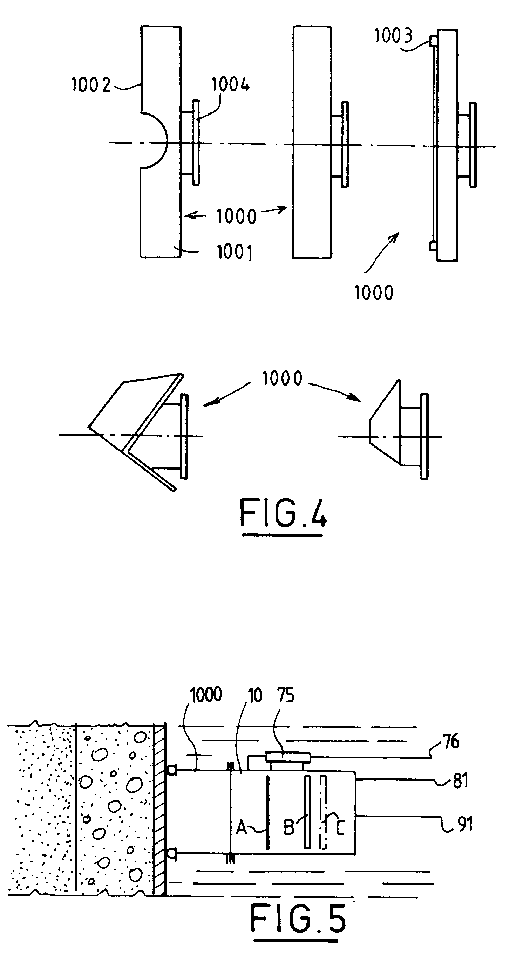

Les embouts 1000 interchangeables amovibles comprennent chacun un boîtier ou caisson 1001 creux avec un plan d'appui 1002 équipé d'un joint 1003 périphérique de tout type approprié. Chaque embout est aussi muni d'une contre-bride 1004 destinée à être fixée sur la bride 104 du corps à l'aide de tous moyens de fixation appropriés tels des boulons et écrous traversant des trous correspondant. Suivant la géométrie de la paroi du bassin à vérifier, l'appui a une conformation plane, anguleuse ou courbe rentrante ou sortante comme cela est clairement illustré sur les diverses vues de la Figure 4.

La membrane flexible tubulaire est faite par exemple en un matériau élastomère approprié, et le reste de l'appareillage est fait en matériaux métalliques de nature et de nuance appropriées. Tous ces matériaux sont mis en forme et travaillés selon des techniques traditionnelles classiques appropriées à la nature des matériaux et aux conformations à obtenir. Par exemple les assemblages sont faits à l'aide de vis et boulons, écrous ou taraudages, rivets, soudure, collages, avec au besoin interposition de joints appropriés lorsqu'il est nécessaire d'assurer une étanchéité, ces joints étant par exemple métalliques, mécano-plastiques ou en matériaux synthétiques.

Le vérin, de préférence à double effet, est alimenté en fluide sous pression à l'aide d'une canalisation raccordée à une pompe appropriée non illustrée.

Le capteur de déplacement qui émet des signaux par exemple de nature électrique de préférence, est branché à une source d'alimentation électrique et à un instrument de mesure appropriés à l'aide de câbles électriques multi-conducteurs comme cela est classique.

Tous les constituants d'un appareillage selon l'invention sont réunis, assemblés et montés comme cela ressort clairement des figures du dessin.

Initialement le corps de l'appareil est muni de l'embout approprié convenablement adapté à la géométrie de la paroi du bassin ou de la piscine à vérifier.

Pour la suite de la description qui porte sur le fonctionnement et la mise en oeuvre de l'appareillage selon l'invention, on supposera que ce dernier est utilisé pour le contrôle d'une piscine à usage nucléaire emplie d'un liquide contaminé. L'appareillage illustré sur la Figure 1 est alors suspendu de manière convenable à un treuil ou palan et est immergé dans le liquide de la piscine de manière que son appui avec son joint périphérique soient situés en regard de la partie de paroi à vérifier et à quelques centimètres de cette dernière, par exemple à 5 cm environ.

On suppose qu'initialemement l'appareil est dans la situation où il est illustré sur la Figure 1. On relie alors le raccord de pompage à une pompe à vide, par exemple d'abord à palettes puis turbo-moléculaire de manière à établir une dépression dans le compartiment d'évacuation.

Ceci fait, on actionne le vérin à double effet dans le sens approprié de manière à faire basculer l'équerre et le loquet qu'elle porte. La sollicitation élastique agissant sur le plateau tournant du dispositif de verrouillage fait que le mentonnet du plateau suit le loquet jusqu'à ce que la découpe du plateau soit dans l'axe du loquet et, simultanément, que les galets soient chacun à l'aplomb de l'ajour périphérique qui lui correspond du plateau tournant. A cet instant, du fait des différences de pression qui règnent entre le compartiment de prélèvement et le compartiment d'évacuation qui a été mis en dépression alors que le compartiment de prélèvement est à la pression hydrostatique qui règne au niveau de la profondeur à laquelle il a été immergé, le piston est brutalement refoulé en direction du fond de la chambre cylindrique. Au cours du recul brutal du piston, l'eau de la piscine qui se trouve entre l'appui de l'embout et la paroi de la piscine se trouve brusquement aspirée et l'appareillage est violemment projeté et plaqué contre la paroi de la piscine, le joint périphérique de l'appui s'écrasant contre la paroi et assurant l'étanchéité en délimitant une enceinte de volume bien défini, déterminé par l'embout et la chambre de prélèvement dont la dimension s'est accrue du fait du recul du piston, la membrane flexible se déployant à la manière d'un doigt de gant entre la jupe du piston et la surface intérieure de la chambre. Le ressort hélicoïdal se trouve comprimé dans une position intermédiaire d'équilibre.

Sur la Figure 5, le piston est passé de la position A qui correspond à celle qu'il occupe sur la Figure 1 à la position B qui correspond à la position d'équilibre initiale pour le début des mesures.

Si une fuite existe, confinée à l'intérieur du joint périphérique de la surface d'appui, du liquide ou de l'air pénètre progressivement dans le compartiment de prélèvement du fait du recul progressif du piston soumis aux différences de pression qui règnent respectivement dans le compartiment de prélèvement et dans le compartiment d'évacuation toujours en dépression. Ce déplacement progressif du piston en direction du fond de la chambre, piston qui occupe une position instantanée C, est saisi par le capteur de déplacement dont le signal est traité. L'importance de la translation du piston et la durée nécessaire à ce déplacement sont suivies en temps réel et permettent d'évaluer l'importance de la fuite puisque la variation du volume du compartiment de prélèvement est connue.

Si pour une raison quelconque le piston ne pouvait pas prendre une position d'équilibre initiale et se trouvait violemment propulsé en direction du fond, le tampon amortisseur arrête le piston pour éviter qu'il détériore le fond de la chambre.

A la fin de la mesure, il suffit de remettre le compartiment d'évacuation à la pression atmosphérique au moins et de ressortir l'appareil de la piscine pour que le ressort rappelle automatiquement le piston à la position initiale illustrée sur la Figure 1. Si pour une raison quelconque l'effort développé par le ressort n'était pas suffisant, il suffit de mettre le compartiment d'évacuation à une pression supérieure à celle régnant dans le compartiment de prélèvement pour replacer le piston dans la position dans laquelle il est illustré sur la Figure 1. A ce moment, on opère sur le vérin pour le faire fonctionner dans le sens opposé afin que le loquet agisse sur le mentonnet pour faire tourner le plateau à l'encontre de la sollicitation élastique et le replacer dans la position verrouillée pour laquelle les ajours du plateau ne sont plus à l'aplomb des galets et bien au contraire sont contre ce dernier.

Un mode de réalisation d'un appareillage selon l'invention comprend par exemple un piston qui se déplace dans la chambre avec une course de l'ordre de 215 mm environ et un compartiment d'évacuation dont le volume maximal est de l'ordre de 4,5 1. La longueur des câbles et canalisations de raccordement atteint voire dépasse sans difficulté une valeur de 25 m.

Un mode de réalisation d'un appareillage selon l'invention comprend par exemple une membrane faite d'un matériau dénommé "Bellofram" et constitué d'un mélange répertorié "BF2" sur le catalogue de la société Le Joint Français. Un tel appareillage fonctionne avec des embouts interchangeables équipés de joint périphériques faits en une mousse à pores fermés qui à l'état initial à une épaisseur de l'ordre de 25 mm et qui a l'état comprimé, lorsque l'embout est appliqué contre une paroi à vérifier, est de l'ordre de 8 mm environ.

Avec un appareillage selon l'invention, lorsqu'il est immergé dans de l'eau contaminée d'une piscine à usage nucléaire, on peut détecter des fuites de 0,1 cm³, soit pour une mesure d'une durée de 10 secondes, un seuil de fuite de 35 cm³/h. De même, si on fait fonctionner l'appareillage selon l'invention non plus en dépression mais en surpression, on peut détecter des fuites d'air de l'ordre de 2,2 litres, à la pression normale, à l'heure sous une pression de 0,5 hPa (bar) ou une fuite d'eau d'un débit de 10 cm³/h.

Ce qui précède fait apparaître les particularités distinctives de l'invention, l'intérêt qu'elle offre et les avantages qu'elle procure.

## Revendications

1. Appareillage pour la vérification de l'étanchéité d'un bassin à liquide notamment d'une piscine à usage nucléaire, caractérisé en ce qu'il comprend un corps (10) délimitant une chambre (100) cylindrique d'axe (Δ) donné avec une surface (101) intérieure, un fond (102) et une ouverture (103), un piston (20) qui est logé dans la chambre (100) dont il est coaxial et qui est apte à y coulisser selon son axe (Δ) et qui comprend une jupe (201) périphérique avec deux cloisons (202) terminales et une douille (21) creuse avec un flasque (211) destiné à coopérer avec l'une de ces cloisons (202) et un bout (212), un guide (30) axial constitué d'une part d'un manchon (31) creux, avec une paroi (311), un obturateur (312) et un orifice (313), qui occupe partiellement la chambre (100) dont il est coaxial et qui est fixé à son fond (102) qu'il transperce et d'autre part un fourreau (32) creux avec une paroi (321), un obturateur (322) et un orifice (323) qui entoure au moins localement le manchon (31) dont il est coaxial et qui est fixé aux cloisons (202) qu'il transperce, une membrane (40) étanche tubulaire flexible fixée d'une part au corps (10) et d'autre part au piston (20) de manière à prendre place entre ces surfaces intérieure (101) et jupe (201) et à délimiter deux compartiments distincts, l'un (401) de prélèvement du côté de l'ouverture (103) et l'autre (402) d'évacuation du côté du fond (102), un ressort (50) d'armement placé entre manchon (31) et fourreau (32) et prenant appui sur les obturateurs (312, 322) de ces derniers (31, 32), un dispositif de verrouillage (60) constitué d'au moins un galet (61) placé sur la surface intérieure (101) de la chambre (100) à proximité de son ouverture (103) de manière à pouvoir tourner selon une direction perpendiculaire à l'axe (Δ) de la chambre (100) et d'un plateau mobile (62) qui est logé dans la chambre (100) et qui est apte à prendre une position verrouillée en appui contre le galet (61) et qui présente au moins un ajour (621) périphérique que peut traverser le galet (61) pour quitter la position verrouillée afin de prendre une position déverrouillée, un palier (63) coaxial à l'axe (Δ) qui est porté par le bout (212) de la douille (21) et l'obturateur (322) du fourreau (32) et qui reçoit le plateau (62), un limiteur (64) de rotation du plateau (62) et une sollicitation élastique (65) tendant à maintenir le plateau (62) dans sa position verrouillée, une commande (70) qui est portée par le corps (10) et qui coopère avec le dispositif de verrouillage (60) pour faire passer le plateau (62) de sa position verrouillée à sa position déverrouillée et inversement, un raccord de pompage (80) débouchant dans le compartiment d'évacuation (402) pour permettre de modifier la pression qui y règne relativement à celle qui règne dans le compartiment de prélèvement (401) et un capteur (90) de déplacement qui est logé dans ces manchon (31) et fourreau (32) du guide (30) entre leurs obturateurs (312, 322).

2. Appareillage selon la revendication 1, caractérisé en ce que le corps (10) est fait de deux éléments (11, 12) réunis par des viroles (110, 120) et en ce que la membrane (40) est maintenue, d'une part, entre ces viroles (110, 120) et, d'autre part, entre une cloison (202) du piston (20) et le flasque (211) de la douille (21).

3. Appareillage selon la revendication 1 ou 2, caractérisé en ce que le palier (63) comprend une portée (631) centrale sur le plateau (62) et une tige (632) axiale solidaire du bout (212) de la douille (21) et de l'obturateur (322) du fourreau (32).

4. Appareillage selon l'une quelconque des revendications 1 à 3, caractérisé en ce que le limiteur de rotation (64) comprend une fente (641) en arc de cercle pratiquée dans le plateau (62) et un doigt (642) fixé sur le bout (212) de la douille (21) et engagé dans la fente (641).

5. Appareillage selon l'une quelconque des revendications 1 à 4, caractérisé en ce que la commande (70) comprend une découpe (71) pratiquée dans le plateau (62) et équipée d'un mentonnet (72) transversal, une équerre (74) articulée sur le corps (10) à proximité de son sommet et dont l'une des branches porte un loquet (73) apte à coopérer avec le mentonnet (72) et dont l'autre des branches est reliée à un vérin (75) porté par le corps (10).

## Patentansprüche

1. Vorrichtung zur Prüfung der Dichtigkeit eines Beckens mit Flüssigkeit, insbesondere eines Reaktorbeckens, dadurch gekennzeichnet, daß sie besteht aus einem Körper (10), der eine zylindrische Kammer (100) mit einer gegebenen Achse (Δ) mit einer Innenfläche (101), einem Boden (102) und einer Öffnung (103) begrenzt, einem Kolben (20), der in der Kammer (100) angeordnet ist, zu der er koaxial ist und der darin entlang ihrer Achse (Δ) gleiten kann und der einen Umfangsmantel (201) mit zwei Endwänden (202) und eine Hohlbuchse (21) mit einem Flansch (211) umfaßt, der dazu bestimmt ist, mit einer dieser Wände (202) und einem Endstück (212) zusammenzuwirken, einer Axialführung (30), die einerseits von einer Hohlmuffe (31) mit einer Wand (311), einem Verschluß (312) und einer Öffnung (313), die teilweise die Kammer (100), zu der sie koaxial ist, einnimmt und an ihrem Boden (102), den sie durchstößt, befestigt ist, und andererseits von einer Hohlmanschette (32) mit einer Wand (321), einem Verschluß (322) und einer Öffnung (323) gebildet wird, die mindestens lokal die Muffe (31), zu der sie koaxial ist, umgibt, und die an den Wänden (202), die sie durchstößt, befestigt ist, einer flexiblen, röhrenförmigen, dichten Membran (40), die einerseits an dem Körper (10) und andererseits an dem Kolben (20) befestigt ist, so daß sie zwischen dieser Innenfläche (101) und dem Mantel (201) zum Liegen kommt und zwei getrennte Abteilungen begrenzt, eine (401) zur Entnahme auf der Seite der Öffnung (103) und die andere (402) zur Entleerung auf der Seite des Bodens (102), einer Verstärkungsfeder (50), die zwischen der Muffe (31) und der Manschette (32) angeordnet ist und auf den Verschlüssen (312, 322) der letztgenannten (31, 32) zum Aufliegen kommt, einer Verriegelungsvorrichtung (60), die von mindestens einer Rolle (61), die auf der Innenfläche (101) der Kammer (100) in der Nähe ihrer Öffnung (103) angeordnet ist, so daß sie sich in eine Richtung senkrecht zur Achse (Δ) der Kammer (100) drehen kann, und einer beweglichen Platte (62) gebildet wird, die in der Kammer (100) angeordnet ist und eine Verriegelungsposition durch Abstützung an der Rolle (61) einnehmen kann und mindestens einen Umfangsausschnitt (621) aufweist, durch den die Rolle (61) hindurchtreten kann, um die Verriegelungsposition zu verlassen, um eine entriegelte Position einzunehmen, einem Lager (63), das zu der Achse (Δ) koaxial ist und von dem Endstück (212) der Buchse (21) und dem Verschluß (322) der Manschette (32) getragen wird und das die Platte (62) aufnimmt, einem Begrenzer (64) der Drehung der Platte (62) und einer elastischen Belastung (65), die bestrebt ist, die Platte (62) in ihrer Verriegelungsposition zu halten, einer Steuerung (70), die von dem Körper (10) getragen wird und mit der Verriegelungsvorrichtung (60) zusammenwirkt, um die Platte (62) von ihrer Verriegelungsposition in ihre entriegelte Position zu bringen und umgekehrt, einem Pumpanschluß (80), der in die Entleerungsabteilung (402) mündet, um es zu ermöglichen, den darin herrschenden Druck relativ zu dem in der Entnahmeabteilung (401) herrschenden zu ändern, und einem Verschiebesensor (90), der in der Muffe (31) und der Manschette (32) der Führung (30) zwischen ihren Verschlüssen (312, 322) angeordnet ist.

2. Vorrichtung nach Anspruch 1, dadurch gekennzeichnet, daß der Körper (10) aus zwei Elementen (11, 12) hergestellt ist, die durch Ringe (110, 120) verbunden sind, und daß die Membran (40) einerseits zwischen diesen Ringen (110, 120) und andererseits zwischen einer Wand (202) des Kolbens (20) und dem Flansch (211) der Buchse (21) gehalten wird.

3. Vorrichtung nach Anspruch 1 oder 2, dadurch gekennzeichnet, daß das Lager (63) eine zentrale Aussparung (631) auf der Platte (62) und eine axiale Stange (632), die mit dem Endstück (212) der Buchse (21) und des Verschlusses (322) der Manschette (32) verbunden ist, umfaßt.

4. Vorrichtung nach einem der Ansprüche 1 bis 3, dadurch gekennzeichnet, daß der Drehbegrenzer (64) einen Spalt (641) in Kreisbogenform, der in der Platte (62) ausgespart ist, und einen Finger (642) umfaßt, der auf dem Endstück (212) der Buchse (21) befestigt ist und in den Spalt (641) eingreift.

5. Vorrichtung nach einem der Ansprüche 1 bis 4, dadurch gekennzeichnet, daß die Steuerung (70) einen Ausschnitt (71), der in der Platte (62) ausgespart und mit einer querliegenden Nase (72) versehen ist, und einen Winkel (74) umfaßt, der auf dem Körper (10) in der Nähe seiner Spitze gelenkig angeordnet ist und von dem einer der Schenkel einen Fallriegel (73) trägt, der mit der Nase (72) zusammenwirken kann, und der andere Schenkel mit einem Zylinder (75) verbunden ist, der von dem Körper (10) getragen wird.

## Claims

1. Equipment for checking the leaktightness of a fluid-containing basin, in particular a nuclear reactor well, characterized in that it comprises: a body (10) which delimits a cylindrical chamber (100) having a given axis (Δ) and with an inner surface (101), a base (102) and an opening (103); a piston (20) which is housed in the chamber (100) with which it is coaxial and is adapted to slide along its axis (Δ) and which comprises a peripheral skirt (201) with two end partitions (202) and a hollow bush (21) with a flange (211) for co-operating with one of these partitions (202) and an end piece (212); an axial guide (30) consisting, first, of a hollow sleeve (31), with a wall (311), a seal (312) and an aperture (313), which occupies part of the chamber (100) with which it is coaxial and which is secured to its base (102) through which it passes and, second, of a hollow sheath (32), with a wall (321), a seal (322) and an aperture (323), which surrounds at least locally the sleeve (31) with which it is coaxial and which is secured to the partitions (202) through which it passes; a flexible tubular leaktight membrane (40) which is secured, first, to the body (10) and, second, to the piston (20) so as to take up a position between the inner surface (101) and the skirt (201) and delimit two separate compartments, a sampling compartment (401) at the end with the opening (103) and an evacuation compartment (402) at the end with the base (102); an activating spring (50) placed between the sleeve (31) and the sheath (32) and bearing on the seals (312, 322) of the latter (31, 32); a locking device (60) consisting of at least one roller (61), placed on the inner surface (101) of the chamber (100) in the vicinity of its opening (103) so that it can rotate in a sense perpendicular to the axis (Δ) of the chamber (100), and of a movable plate (62) which is housed in the chamber (100) and is adapted to assume a locked position in abutment against the roller (61) and has at least one peripheral opening (621) through which the roller (61) can pass to leave the locked position in order to assume an unlocked position, a bearing (63), which is coaxial with the axis (Δ) and supported by the end piece (212) of the bush (21) and the seal (322) of the sheath (32) and which holds the plate (62), a limiter (64) for limiting the rotation of the plate (62) and a resilient stress device (65) holding the plate (62) in its locked position; a control device (70) which is supported by the body (10) and co-operates with the locking device (60) in order to move the plate (62) from its locked position into its unlocked position and vice versa; a pumping connection (80) opening into the evacuation compartment (402) to allow the pressure prevailing therein to be modified relative to the pressure prevailing in the sampling compartment (401); and a movement sensor (90) which is housed in the sleeve (31) and the sheath (32) of the guide (30) between their seals (312, 322).

2. Equipment according to Claim 1, characterized in that the body (10) is composed of two elements (11, 12) connected by collets (110, 120); and in that the membrane (40) is held, first, between these collets (110, 120) and, second, between a partition (202) of the piston (20) and the flange (211) of the bush (21).

3. Equipment according to Claim 1 or 2, characterized in that the bearing (63) comprises a central supporting surface (631) on the plate (62) and an axial rod (632) which is integral with the end piece (212) of the bush (21) and the seal (322) of the sheath (32).

4. Equipment according to any one of Claims 1 to 3, characterized in that the rotation limiter (64) has an arcuate slot (641) in the plate (62) and a finger (642) secured to the end piece (212) of the bush (21) and engaged in the slot (641).

5. Equipment according to any one of Claims 1 to 4, characterized in that the control device (70) has a cut-out (71) which is made in the plate (62) and equipped with a transverse catch (72), and an angle piece (74) which is articulated on the body (10) in the vicinity of its vertex and of which one of the branches bears a latch (73) which can cooperate with the catch (72) and of which the other branch is connected to a jack (75) carried by the body (10).
